# EUROPEAN PATENT APPLICATION

(11) **EP 4 382 339 A1**
(43) Date of publication of application: **12.06.2024**
(21) Application number: 21952585.4
(22) Date of filing: 26.11.2021
(51) Int. Cl.: B60L 3/00, B60L 50/71, B60L 58/30, B60L 58/40

(54) **FAULT MANAGEMENT METHOD AND DEVICE FOR HYBRID POWER SYSTEM HAVING MULTIPLE FUEL CELLS**

(30) Priority: 05.08.2021 CN 202110895977
(71) Applicant: CRRC TANGSHAN CO., LTD., Fengrun District Tangshan Hebei 063035 (CN)
(72) Inventor: HAN, Guopeng, Tangshan, Hebei 063035 (CN); PEI, Chunxing, Tangshan, Hebei 063035 (CN); WANG, Yanqin, Tangshan, Hebei 063035 (CN); WANG, Xinghua, Tangshan, Hebei 063035 (CN); LIU, Nan, Tangshan, Hebei 063035 (CN); ZHAO, Lili, Tangshan, Hebei 063035 (CN); FENG, Xuan, Tangshan, Hebei 063035 (CN)
(74) Representative: Michalski Hüttermann & Partner Patentanwälte mbB
(86) International application number: PCT/CN2021/133407
(87) International publication number: WO 2023/010722

(57) **Abstract**

A fault management method and device for a hybrid power system having multiple fuel cells. The method comprises: obtaining a main state value of the hybrid power system; obtaining a health state value of the hybrid power system at a current moment; the main state value and the health state value representing power supply states of the hybrid power system at different moments, and the power supply states being determined by a power supply topological structure formed by batteries, capable of supplying power to the outside, in the hybrid power system; and executing, according to the two power supply states corresponding to the main state value and the health state value, fault processing programs corresponding to the two power supply states, and controlling a bypass isolation switch according to the fault processing programs.

## Description

### TECHNICAL FIELD

The present disclosure relates to the field of energy management, and more particularly to a fault management method and a device for a hybrid power system with multiple fuel cells.

### BACKGROUND

An electric-electric hybrid power system composed of the fuel cell/power battery is often used in the power system of rail vehicles. Compared with automobiles, the hybrid power system of rail vehicles requires higher power and generally employs the customized high-power fuel cell system, which is costly and has low technology maturity. Although the low-power fuel cell has higher technological maturity and stronger selectivity, it cannot be directly applied to rail vehicles because of the low power of each single one.

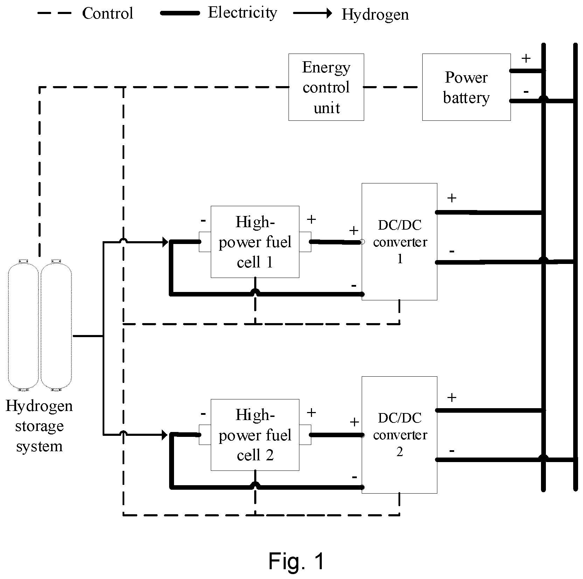

The conventional hybrid power system of rail vehicles mainly employs the high-power fuel cells paralleled simply for the power supply, as shown in Fig. 1. In this solution, each high-power fuel cell is connected to the DC bus via a DC/DC converter, and the power battery is directly connected to the DC bus. The power supply solution of a hybrid power system with high-power fuel cells simply paralleled, due to the high-power demand of each single fuel cell, generally requires customized development with high cost. And, affected by the operating characteristics of fuel cells, when the power demand of vehicles is small, the efficiency of high-power fuel cells is at a low point, which is not conducive to improving the system efficiency. Due to the small number of fuel cells in the system, there is often only one external interface of the fuel cell system. When the power battery or fuel cell fails, the system can only continue to operate with the power battery or fuel cell that is still in the normal state, or the system will directly lead to system shutdown, which means poor fault tolerance.

### SUMMARY

The embodiment of the present disclosure provides a fault management method and a fault management device for a hybrid power system with multiple fuel cells to solve the technical problems.

In the first aspect, the embodiment of the present disclosure provides a fault management method for a hybrid power system with multiple fuel cells, wherein the hybrid power system comprises a power battery and a fuel cell system, wherein the fuel cell system comprises at least two branches paralleled, each branch has at least two fuel cells connected in series, each branch is respectively connected to a DC bus via a DC/DC converter, and the power battery is connected to the DC bus, a bypass isolating switch is disposed at two ends of each fuel cell in parallel for connecting the fuel cell into the fuel cell system for the power supply or disconnecting the fuel cell from the fuel cell system. The method comprises the following steps: acquiring a main state value of a hybrid power system; acquiring a health state value of the hybrid power system at a current time; wherein the main state value and the health state value represent the power supply state of the hybrid power system at different times, and the power supply state is determined by a power supply topology formed by the fuel cells capable of external power supply in the hybrid power system; according to two power supply states corresponding to the main state value and the health state value, executing a fault processing program corresponding to the two power supply states, and according to the fault processing program, controlling the bypass isolating switch.

In the first aspect, the embodiment of the present disclosure provides a fault management device for a hybrid power system with multiple fuel cells, wherein the hybrid power system comprises a power battery and a fuel cell system, wherein the fuel cell system comprises at least two branches paralleled, each branch has at least two fuel cells connected in series, each branch is respectively connected to a DC bus via a DC/DC converter, and the power battery is connected to the DC bus, a bypass isolating switch is disposed at two ends of each fuel cell in parallel for connecting the fuel cell into the fuel cell system for the power supply or disconnecting the fuel cell from the fuel cell system. The device comprises: a state value acquisition module, configured to acquire the main state value of a hybrid power system and to acquire a health state value of the hybrid power system at a current time; wherein the main state value and the health state value represent the power supply state of the hybrid power system at different times, and the power supply state is determined by a power supply topology formed by the fuel cells capable of external power supply in the hybrid power system; and a fault management module, configured to, according to two power supply states corresponding to the main state value and the health state value, execute a fault processing program corresponding to the two power supply states, and according to the fault processing program, control the bypass isolating switch.

According to the technical solution, multiple low-power fuel cells can be connected in series and in parallel to form a complex fuel cell system. Compared with the high-power fuel cells simply paralleled, the present technical solution can reduce costs and improve system efficiency. Also, in order to realize the fault management for the hybrid power system comprising the fuel cell system and the power battery, the health state value at the current time is compared with the main state value at the previous time, the main state value and the health state value represent the power supply states of the hybrid power system at different times, the corresponding fault processing program is executed according to the two power supply states corresponding to the main state value and the health state value, and the bypass isolating switch is controlled according to the fault processing program, so that the normal fuel cell with restored power is re-connected to the system or the fuel cell is disconnected via the bypass isolating switch. Therefore, according to the different situations between the current time and the previous time, the present solution can make corresponding treatment in time, such as self-restoring the power of the hybrid power system in time or restarting the faulty fuel cell in time, so as to improve the power supply reliability of the hybrid power system.

### BRIEF DESCRIPTION OF THE DRAWINGS

The drawings illustrated herein serve to provide a further understanding of and constitute a part of the present disclosure, and the illustrative embodiments of this present disclosure and the description thereof are used to explain this present disclosure and are not unduly limiting. In the drawings:
Fig. 1 is a schematic structural diagram of a hybrid power system of a rail vehicle in the related art.
Fig. 2 is a schematic structural diagram of a hybrid power system of a rail vehicle in an embodiment of the present disclosure.
Fig. 3 is a flowchart of a fault management method for a hybrid power system with multiple fuel cells provided by the embodiment of the present disclosure.
Fig. 4 is a flowchart of a determining process for the health state value HBS_Hstate according to the embodiment of the present disclosure.
Fig. 5 is a flowchart of the detailed process of Step 220 shown in Fig. 4.
Fig. 6 is a schematic diagram of a fault management device of a hybrid power system with multiple fuel cells according to the embodiment of the present disclosure.

### DETAILED DESCRIPTION OF THE EMBODIMENTS

Exemplary embodiments of the present disclosure will be described in detail below in conjunction with the accompanying drawings and it will be apparent that the described embodiments are only part of the embodiments of the present disclosure and are not exhaustive of all embodiments. It should be noted that the embodiments in the present disclosure and the features in the embodiments can be combined without conflict.

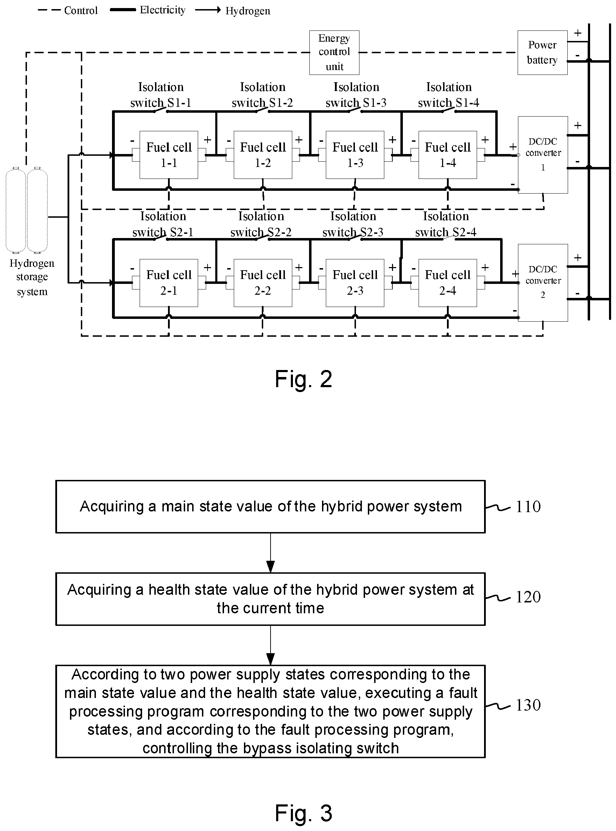

In the embodiments of the present disclosure, multiple low-power fuel cells are connected in series, and connected in parallel to form a complex fuel cell system. Fig. 2 is a schematic structural diagram of a hybrid power system of a rail vehicle according to the embodiment of the present disclosure. As shown in Fig. 2, the hybrid power system with multiple fuel cells comprises: a power battery and a fuel cell system. The fuel cell system comprises at least two branches paralleled, each branch having at least two fuel cells connected in series. Each branch is connected to a DC bus via a DC/DC converter. Specifically, all the fuel cells on the same branch are connected in series and then connected to the DC bus via the DC/DC converter, while the power battery is also connected to the same DC bus. In a hybrid power system, the power battery is employed to maintain the voltage of the DC bus, the large capacity characteristic of the power battery can prevent a sudden change in the DC bus voltage, and serve a function of peak-load shifting.

In one embodiment, the fuel cell system comprises two branches paralleled, namely a first branch and a second branch, and each branch has four fuel cells connected in series, as shown in Fig. 2, the fuel cell system has a 4-series-2-parallel topology. It is appreciated that the fuel cell system may also have three, four, or even more branches paralleled, and the number of fuel cells connected in series in each branch can be equal or unequal.

In the same branch, the series current remains constant, and the voltage is the sum of the voltages of all fuel cells, four fuel cells connected in series are connected to an input terminal of the DC/DC converter, which controls the boost ratio of the DC/DC converter at a low value, and enhances the electric-to-electric conversion efficiency. The main function of the DC/DC converter is voltage boosting and voltage stabilizing. The voltage boosting is required due to the output power of the fuel cell not meeting the vehicle's usage requirements, connecting too many fuel cell units in series may result in imbalances, and lead to performance degradation, therefore the fuel cell manufacturers set a relatively low output voltage, then voltage boosting is necessary. The voltage stabilization is required due to the soft output characteristics of the fuel cell, where an increase in current may cause a rapid voltage drop. Therefore, the fuel cell needs to be used in conjunction with the DC/DC converter.

The branches paralleled ensure the vehicle power demand while improving the reliability of its power supply. The bypass disconnect switch is connected in parallel at two ends of each fuel cell to connect the fuel cell into the fuel cell system for power supply or disconnect the fuel cell from the fuel cell system. Therefore, by means of the bypass disconnect switch, when any fuel cell fails, the faulty fuel cell can be promptly disconnected from the system and then reconnected once the issue is resolved, which overcomes the shortcomings of low reliability in series connections and high costs in parallel connections, improving the reliability of the fuel cell system with multiple fuel cells coupled. A hydrogen storage system provides hydrogen for the entire fuel cell system. An energy control unit controls various units (power battery, fuel cell, hydrogen storage system, and DC/DC converter) in the hybrid power system.

According to the topology shown in Fig. 2, the power supply state of the hybrid power system with multiple fuel cells has six states as follows:
(1) normal power supply;
(2) limp-home hybrid power supply;
(3) limp-home pure battery power supply;
(4) limp-home pure fuel cell power supply;
(5) limp-home pure fuel cell failure power supply; and
(6) hybrid power system failure.

The mentioned power supply states are determined based on the power supply topology formed by the fuel cells capable of external power supply in the hybrid power. The fault states of various units (for example, power battery, fuel cell, hydrogen storage system, or DC/DC converter) in the hybrid power system are uniformly classified into three levels. Level 0 indicates no fault, level 1 indicates that certain parameters deviate from normal values and require attention, but do not affect the operation, and level 2 indicates the occurrence of a fault. The fault level at level 0 or level 1 is considered a normal fault state, and the fault level at level 2 is considered a faulty state.

Before the rail vehicle starts, that is, before the hybrid power system starts, the main state value HBS_state will be initialized and determined, and the power supply processing program corresponding to the main state value HBS_state will be initially started. For example, when the main state value HBS_state is 2, the power supply processing program executed is a pure power battery power supply processing program.

Because of the complex structure of the fuel cell system with multiple fuel cells, if some units in the hybrid power system fail before starting, the system can operate with different fault power supply topologies. Because of the dynamic changes of each unit during the vehicle running, the hybrid power system may enter the fault state from the normal state, or conversely, the power supply state of the hybrid power system may face the problem of transition, which may change from a lighter fault state to another heavier fault state (continuing to lose power), or from one fault state to another lighter fault state (or normal) (regaining a part of power). Therefore, the present disclosure provides a fault management method for a hybrid power system with multiple fuel cells. The method is based on the structure of the hybrid power system (part of the embodiment is illustrated with the structure of 4-series-2-parallel in Fig. 2 as an example), and executes a corresponding fault processing program according to the main state value and the health state value determined at the current time, so as to manage the power supply state of the hybrid power system.

Fig. 3 is a flowchart of a fault management method provided by the embodiment of the present disclosure. As shown in Fig. 3, the method comprises:
Step 110, acquiring a main state value of the hybrid power system;
Step 120, acquiring a health state value of the hybrid power system at the current time; and
Step 130, according to two power supply states corresponding to the main state value and the health state value, executing a fault processing program corresponding to the two power supply states, and according to the fault processing program, controlling the bypass isolating switch.

The main state value and health state value represent the power supply state of the hybrid power system at different times, and the power supply state is determined by the power supply topology formed by the fuel cells capable of external power supply in the hybrid power system.

In one embodiment, the main state values in Step 110 can be determined before the system startup or can be determined by re-assignment of the main state values via the fault processing program during the operation of the hybrid power system, so that the main state values are not static but dynamic after system startup.

In the embodiment, the main state value HBS_state and the health state value HBS_Hstate are determined in the same manner, and the determining process of the health state value HBS_Hstate will be described below by taking the health state value HBS_Hstate as an example, but it should be understood that the main state value HBS_state is also determined in the same manner, so the main state value HBS_state will not be specifically described.

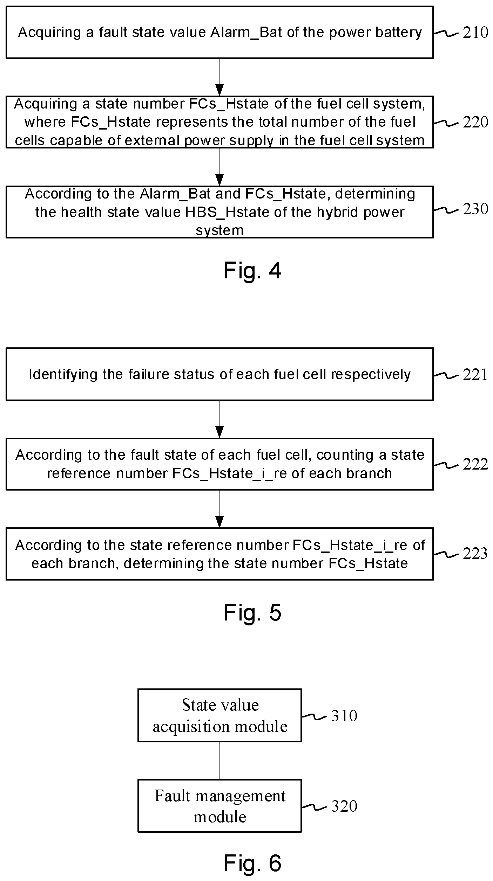

Fig. 4 is a determining process for the health state value HBS_Hstate in the present embodiment, which comprises:
Step 210, acquiring a fault state value Alarm_Bat of the power battery.

The fault state of the power battery is defined into three levels. Level 0 represents no fault. Level 1 represents that some parameters deviate from normal values, which needs attention but does not affect the operation. Level 2 represents having a fault. The fault level at level 0 or level 1 is considered a normal fault state, and the fault level at level 2 is considered a faulty state. Therefore, if the fault level is 0 or 1, the fault state value Alarm_Batof the power battery is assigned as 1, indicating that the power battery is normal, and if the fault level is 2, the fault state value Alarm_Bat of the power battery is assigned as 0, indicating that the power battery is faulty.

Step 220, acquiring a state number FCs_Hstate of the fuel cell system, where FCs_Hstate represents the total number of the fuel cells capable of external power supply in the fuel cell system.

More specifically, as shown in Fig. 5, Step 220 comprises:
Step 221, identifying the failure status of each fuel cell respectively.

The fault state of the fuel cell is defined into three levels. Level 0 represents no fault. Level 1 represents that some parameters deviate from normal values, which needs attention but does not affect operation. Level 2 represents having a fault. The fault level at level 0 or level 1 is considered a normal fault state, and the fault level at level 2 is considered a faulty state. If the fault level of the fuel cell is level 0 or level 1, the fault state of the fuel cell is determined to be normal, and if the fault level of the fuel cell is level 2, the fault state of the fuel cell is determined to be the faulty state.

Step 222, according to the fault state of each fuel cell, counting a state reference number FCs_Hstate_i_re of each branch.

FCs_Hstate_i_re represents the number of fuel cells having a normal state in the i-th branch. If there are 4 fuel cells in series in the second branch, in which the fault state of 3 fuel cells is normal and the fault state of 1 fuel cell is faulty, the state reference number FCs_Hstate_2_re of the second branch is acquired as 3.

Step 223, according to the state reference number FCs_Hstate_i_re of each branch, determining the state number FCs_Hstate.

After acquiring the state reference number FCs_Hstate_i_re of each branch, determining whether the hydrogen storage system connected to the fuel cell system is faulty or not, where the fault state of the hydrogen storage system is defined into three levels, level 0 indicates no fault, level 1 indicates that some parameters deviate from normal values, which need attention but do not affect the operation, and level 2 indicates having a fault. The fault level at level 0 or level 1 is considered a normal fault state, and the fault level at level 2 is considered a faulty state. If the fault level of the hydrogen storage system is level 0 or level 1, the hydrogen storage system is determined to be not faulty, and if the fault level of the hydrogen storage system is level 2, the hydrogen storage system is considered to be in the faulty state.

If the hydrogen storage system is not faulty, further determining whether the DC/DC converter connected with each branch is faulty or not. The state reference number FCs_Hstate_i_re of the branch of the DC/DC converter not faulty is assigned as the state target number FCs_Hstate_i of the branch of the DC/DC converter, and the state target number FCs_Hstate_i of the branch of the DC/DC converter with fault is set to zero, and the FCs_Hstate_i represents the number of fuel cells capable of external power supply in the i-th branch. The state number FCs_Hstate is acquired from the sum of the state target number FCs_Hstate_i of each branch.

Because the whole fuel cell system has one set hydrogen storage system to supply hydrogen, if the hydrogen storage system fails, the whole fuel cell system will not operate normally, and will not be capable of external power supply. At this time, the state target number FCs_Hstate_i of each branch and the state number FCs_Hstate of the fuel cell system are directly set to zero.

Taking Fig. 2 as an example, in a specific embodiment of Steps 221-222, the fault states of the fuel cells are identified one by one. If the fault level of the fuel cells is not level 2, the fuel cells are considered to be normal, and the fault state value FCX_X_OK is set to 1, otherwise, set to 0. The first X in FCX_X_OK is a branch reference number, representing two branches in parallel, with a value of 1 or 2, and the second X is a fuel cell reference number, representing four fuel cells in series, with a value of 1, 2, 3 or 4. Then the fault state values FCX_X_OK of each branch fuel cell are summed and assigned as FCs_Hstate_1_re and FCs_Hstate_2_re respectively. If the hydrogen storage system fails, the state target number FCs_Hstate_1, FCs_Hstate_2, which indicate the number of fuel cells capable of external power supply in the branch, and the state number FCs_Hstate of the fuel cell system are all set to 0. If the hydrogen storage system is not faulty, the fault state of the DC/DC converter connected to each branch is further determined. If the DC/DC converter of the branch is faulty (i.e., there is a fault in level 2), the state target number FCs_Hstate_i of the branch is set to 0. If the DC/DC converters of the two branches are not faulty, FCs_Hstate_1_re and FCs_Hstate_2_re are assigned as FCs_Hstate_1 and FCs_Hstate_2 respectively, and then the state number FCs_Hstate of the fuel cell system is acquired by summing FCs_Hstate_1 and FCs_Hstate_2.

After acquiring the fault state value Alarm_Bat of the power battery and the state number FCs_Hstate of the fuel cell system, Step 230 is executed to determine the health state value HBS_Hstate of the hybrid power system, according to the Alarm_Bat and FCs _H state.

The health state value HBS_Hstate indicates the power supply state of the hybrid power system at the current time. As mentioned above, the hybrid power system in the embodiment comprises six power supply states: (1) normal power supply; (2) limp-home hybrid power supply; (3) limp-home pure battery power supply; (4) limp-home pure fuel cell power supply; (5) limp-home pure fuel cell failure power supply; (6) hybrid power system failure.

In Step 230, the health state value HBS_Hstate is specifically determined as follows:
(1) normal power supply state HBS_Hstate=0: The power battery and the fuel cell system in the hybrid power system are normal, and the power can be provided according to the normal energy allocation strategy.
   When Alarm_Bat indicates that the power battery is normal and FCs_Hstate is equal to M, the health state value HBS_Hstate is assigned as the target value, where M is the total number of fuel cells in the fuel cell system, and the target value corresponds to the normal power supply state of the hybrid power system. For convenience of implementation, the target value can be 0.
(2) limp-home hybrid power supply HBS_Hstate=1: In this state, the power battery is normal, and there are some fuel cell faults in the fuel cell system. At this time, the hybrid power system provides power by hybrid power. Because the system comprises 8 fuel cells, the system topology of HBS_Hstate=1 contains many situations, such as single branch fault and double branch fault, and the number ofbranch faults also has many combinations. Therefore, even if the main state value and the health state value are consistent, the power supply state of the hybrid power system may change.

When Alarm_Bat indicates that the power battery is normal and FCs_Hstate∈[1, M-1], the health state value HBS_Hstate is assigned as a first value, and the first value corresponds to the hybrid power supply state of the hybrid power system. For convenience of implementation, the first value can be 1.

(3) limp-home pure battery power supply HBS_Hstate=2: In this state, the power battery is normal, and the whole fuel cell system cannot supply power normally, so the power battery is employed to supply power to the system alone.

When Alarm_Bat indicates that the power battery is normal and FCs_Hstate is equal to 0, the health state value HBS_Hstate is assigned as a second value, and the second value corresponds to the pure power battery power state of the hybrid power system. For convenience of implementation, the second value can be 2.

(4) limp-home pure fuel cell power supply HBS_Hstate=3: In this state, the power battery fails, and all fuel cells in the whole fuel cell system are normal. Because there is no voltage stabilizer on the DC bus, the DC/DC converter connected to the fuel cells can be set to the voltage source operation mode for external output.

When Alarm_Bat indicates power battery failure and FCs_Hstate is equal to M, the health state value HBS_Hstate is assigned as a third value, and the third value corresponds to the pure fuel cell power supply state of the hybrid power system. For convenience of implementation, the third value can be 3.

(5) limp-home pure fuel cell failure power supply HBS_Hstate=4: In this state, the power battery fails, and some fuel cells fail in the fuel cell system. The hybrid power system can have the fuel cell in the normal state to supply power for external output. At the same time, in order to meet the minimum power supply requirements of vehicles (auxiliary load power supply), HBS_Hstate is assigned as 4 when FCs_Hstate is not less than the preset basic number. Because the system comprises 8 fuel cells, the system topology with HBS_Hstate=4 contains many situations, such as single branch fault, and double branch fault, and the number of branch faults also has many combinations, so even if the main state value and the health state value are consistent, the power supply state of the hybrid power system may change.

When Alarm_Bat indicates power battery failure and FCs_Hstate∈[M', M-1], the health state value HBS_Hstate is assigned as a fourth value, where M' is the preset basic number of fuel cells meeting the minimum power supply requirements of the vehicle, and the fourth value corresponds to the pure fuel cell failure power supply state of the hybrid power system. For convenience of implementation, the fourth value can be 4, and the preset basic number M' of fuel cells meeting the minimum power supply requirements of the vehicle can be 2.

(6) hybrid power system fault HBS_Hstate=5: In this state, the power battery and the whole fuel cell system are faulty (or the fuel cell does not meet the minimum power supply requirements of the vehicle), and the hybrid power system cannot supply power for external output, so it is necessary to turn off the power supply for troubleshooting.

When Alarm_Bat indicates a power battery failure and FCs_Hstate∈[0, M'), the health state value HBS_Hstate is assigned as a fifth value and the fifth value corresponds to the fault state of the hybrid power system. For convenience of implementation, the fifth value can be 5.

When the system starts, if the main state value HBS_state is the target value, the system starts according to the normal power supply processing program. If the main state value HBS_state is the first value, the system starts according to the hybrid power supply processing program. If the main state value HBS_state is the second value, the system starts according to the pure power battery power supply processing program. If the main state value HBS_state is the third value, the system starts according to the pure fuel cell power supply processing program. If the main state value HBS_state is the fourth value, the system starts according to the pure fuel cell fault power supply processing program. If the main state value HBS_state is the fifth value, the fault shutdown processing program is preformed and the system is not started.

After acquiring the main state value HBS_state and the health state value HBS_Hstate of the hybrid power system, the corresponding fault processing program is executed according to the two power supply states corresponding to the main state value HBS_state and the health state value HBS_Hstate. In this embodiment, the specific implementation mode of the fault processing program executed when the main state value HBS_state and the health state value HBS_Hstate are different values is given below, comprising the following situations:
The first case: HBS state=HBS_Hstate= the first value

When both HBS_state and HBS_Hstate are equal to the first value, updating the fault state of each fuel cell in the fuel cell system. The branch where the state target number FCs_Hstate_i at the current time is reduced compared to the state target number FCs_Hstate_i at the time when the main state value HBS_state is determined is turned off. The determination time of the main state value HBS_state can be the time to determine the main state value HBS_state before the system starts, or can be the time to re-assign the main state value HBS_state during the system operating.

If all branches are turned off, set the program jump symbol to one, otherwise, set the program jump symbol to zero. If the program jump symbol is set to one, the main state value HBS_state is immediately assigned as the second value to trigger the pure power battery power supply processing program corresponding to the main state value HBS_state being the second value.

Optionally, the fuel cell system comprises the first branch and the second branch in parallel, and after turning off the branch in which the state target number FCs_Hstate_i at the current time is reduced compared with the state target number FCs_Hstate_i at the time when the main state value HBS_state is determined, the power improvement flag FCs1_rs and the operational state symbol FCs1_run of the first branch and the power improvement symbol FCs2_rs and the operational state symbol FCs2_run of the second branch are respectively determined. The power improvement symbol indicates whether the power of the branch has improved, and the operational state symbol indicates whether the branch is in the operation state. If the program jump symbol is set to zero, determining whether any one of the following three situations occurs:
FCs1_rs is set to one and FCs2_rs is set to one; or
FCs1_rs is set to one and FCs2_run is set to zero; or
FCs2_rs is set to one and FCs1_run is set to zero.

If any one of the above three situations occurs, it indicates that both branches have power improvement, or one branch has power improvement and the other branch has been turned off. In order to improve the power in these three situations, the fuel cell system needs to be completely turned off before restarting. Therefore, after waiting until the vehicle is in a parking state, the branch with the power improvement symbol set to one is turned off, and the main state value HBS_state is assigned as the second value to trigger the pure power battery power supply processing program corresponding the main state value HBS_state being the second value. After entering the pure power battery power processing program, the whole fuel cell system is completely shut down.

If the above three conditions do not occur, indicating that only one branch needs to be updated (the other branch is already powered and the state has not changed), the branch that needs to be updated is restarted. For example, when FCs1_rs is set to one and FCs2_run is set to one, which does not belong to any of the above three situations, which indicates that the power of the first branch is improved and the second branch is in an operating state, and only the first branch needs to be restarted at this time.

The second case: HBS_state = HBS_Hstate = the fourth value
When both HBS_state and HBS_Hstate are equal to the fourth value, updating the fault state of each fuel cell in the fuel cell system. Turning off the branch in which the state target number FCs_Hstate_i at the current time is reduced compared with the state target number FCs_Hstate_i at the time when the main state value HBS_state is determined. If all branches are turned off, set the program jump symbol to one, otherwise, set the program jump symbol to zero.

If the program jump symbol is set to one, the main state value HBS_state is assigned as the fifth value immediately, so as to trigger the fault shutdown processing program corresponding to the main state value HBS_state being the fifth value, and the fault shutdown can be executed.

Optionally, the fuel cell system comprises the first branch and the second branch in parallel, and after turning off the branch in which the state target number FCs_Hstate_i at the current time is reduced compared with the state target number FCs_Hstate_i at the time when the main state value HBS_state is determined, the power improvement symbol FCs1_rs and the operational state symbol FCs1_run of the first branch and the power improvement symbol FCs2_rs and the operational state symbol FCs2_run of the second branch are respectively determined.

If the program jump symbol is set to zero, determining whether any one of the following three situations occurs:
FCs1_rs is set to one and FCs2_rs is set to one; or
FCs1_rs is set to one and FCs2_run is set to zero; or
FCs2_rs is set to one and FCs1_run is set to zero.

If any one of the three conditions occurs, a health state improvement prompt of the hybrid power system is sent to the driver, prompting the driver to improve the power state of the hybrid power system by restarting, during which the vehicle is powered off.

If any of the above three conditions do not occur and the power improvement symbols of the first branch and the second branch are not all set to zero, waiting until the vehicle is in a parking state, and restarting the branch with the power improvement symbol set to one. If the power improvement symbol of the first branch and the second branch is set to zero, indicating that there is no power improvement in both branches, no operation can be performed at this time, and the current power supply processing program can continue to operate.

The third case: HBS_state = the target value, HBS_Hstate! = target value
HBS_state = target value, HBS_Hstate! = target value, the case comprises the following sub-cases:
(1) When the HBS_state is equal to the target value and the HBS_Hstate is equal to the first value, updating the fault state of each fuel cell in the fuel cell system, turning off the branch in which the state target number FCs_Hstate_i at the current time is reduced compared with the state target number FCs_Hstate_i at the time when the main state value HBS_state is determined. If all branches are turned off, setting the program jump symbol to one, otherwise, setting the program jump symbol to zero. If the program jump symbol is set to one, assigning the main state value HBS_state immediately as the second value to trigger the pure power battery power supply processing program corresponding to the main state value HBS_state being the second value.
(2) When HBS_state is equal to the target value and HBS_Hstate is equal to the second value, updating the fault state of each fuel cell in the fuel cell system, turning off the branch in which the state target number FCs_Hstate_i at the current time is reduced compared with the state target number FCs_Hstate_i at the time when the main state value HBS_state is determined. Since HBS_Hstate is equal to the second value, compared with the determination time of the main state value HBS_state, both branches have newly added faulty fuel cells. After the branch with reduced state target number FCs_Hstate_i is turned off, both branches are turned off, that is, both branches are shut down. Therefore, the main state value HBS_state is immediately assigned as the second value to trigger the pure power battery power supply processing program corresponding to the main state value HBS_state being the second value.
(3) When the HBS_state is equal to the target value and the HBS_Hstate is equal to the third value, the fourth value or the fifth value, due to the power battery is directly connected to the bus, the power battery and the fuel cell supply power together at the determining time of the main state value HBS_state, then the control mode of the DC/DC converter is set to the current source operation mode. If the health state value HBS_Hstate reflecting the current real-time power supply state is equal to the third value, the fourth value or the fifth value, indicating that the power battery fails and needs to be supplied by the fuel cell. At this time, the primary object is to maintain the bus voltage, so the control mode of the DC/DC converter needs to be changed from the current source operation mode to the voltage source operation mode. However changing modes requires to shutdown the system, which can not be changed directly. So the main state value HBS_state is assigned as the fifth value, to trigger the fault shutdown processing program corresponds to the fifth value to shutdown the system. After the shutdown, changing the modes of the DC/DC converter can be completed.

The fourth case: HBS_state = the first value, HBS_Hstate! = the first value
HBS_state = the first value, HBS_Hstate! = the first value, the case comprises the following sub-cases:
(1) When the HBS_state is equal to the first value and the HBS_Hstate is equal to the target value, updating the fault state of each fuel cell in the fuel cell system, determining the power improvement symbol FCs1_rs and the operational state symbol FCs1_run of the first branch and the power state symbol FCs2_rs and the operational state symbol FCs2_run of the second branch respectively, and determining whether any of the following three situations occur:
   FCs1_rs is set to one and FCs2_rs is set to one; or
   FCs1_rs is set to one and FCs2_run is set to zero; or
   FCs2_rs is set to one and FCs1_run is set to zero.

If any one of the three conditions occurs, after waiting until the vehicle is in the parking state, the branch with the power improvement symbol set to one is turned off, and the main state value HBS_state is assigned as the second value, so as to trigger the pure power battery power supply processing program corresponding to the main state value HBS_state being the second value.

(2) When HBS_state is equal to the first value and HBS_Hstate is equal to the second value, updating the fault state of each fuel cell in the fuel cell system, turning off the branch in which the state target number FCs_Hstate_i at the current time is reduced compared with the state target number FCs_Hstate_i at the time when the main state value HBS_state is determined, assigning the main state value HBS_state immediately with the second value to trigger the pure power battery power processing program corresponding to the main state value HBS_state being the second value.

(3) When HBS_state is equal to the first value and HBS_Hstate is equal to the third value, the fourth value or the fifth value, assigning the main state value HBS_state immediately as the fifth value, so as to trigger the fault shutdown processing program corresponding the main state value HBS_state being the fifth value.

The fifth case: HBS_state = the second value, HBS_Hstate! = the second econd value
HBS_state = the second number, HBS_Hstate! = the second value, the case comprises the following sub-cases:
(1) When HBS_state is equal to the second value and HBS_Hstate is equal to the target value or the first value, after waiting until the vehicle is in a parking state, the current health state value HBS_Hstate is assigned as the main state value HBS_state to trigger the power supply processing program corresponding to the new main state value.
   As an example, the main state value HBS_state is assigned as the target value to trigger entry into a normal power supply process, if HBS_Hstate is equal to a target value at the moment, and the main state value HBS_state is assigned as the first value to trigger entry into the hybrid power supply process, if HBS_Hstate is equal to the first value at the moment.
(2) When HBS_state is equal to the second value and HBS_Hstate is equal to the third value, the fourth value, or the fifth value, indicating that the power battery is changed from the original normal state to the fault state, so the power battery needs to be disconnected from the system, and the DC/DC converter in the fuel cell system is switched to the bus by the voltage source operation mode at the same time. In order to prevent the bus voltage fluctuates greatly during the power battery switching and the fuel cell switching, this switching is completed during the shutdown. Therefore, the main state value HBS_state is immediately assigned as the fifth value to trigger the fault shutdown processing program corresponding to the main state value HBS_state being the fifth value, and the fault shutdown can be executed, after shutdown the switching can be completed.

The sixth case: HBS_state = the third value, HBS_Hstate! = the third value
HBS_state = the third number, HBS_Hstate! = the third value, the case comprises the following sub-cases:
(1) When HBS_state is equal to the third value and HBS_Hstate is equal to the target value or the first value, the power battery returns to normal and can enter the hybrid power supply mode, but the recovery of the power battery can only be completed via shutdown switching. Therefore, a shutdown switching prompt is sent to the driver to prompt the driver that the power battery returns to normal and can enter the hybrid power supply state after shutdown switching. The driver chooses whether to shut down for switching, according to self-demand, and does not adopt program intervention. During shutdown switching, the hybrid power system loses power.
(2) When HBS_state is equal to the third value and HBS_Hstate is equal to the second value, the hybrid power system can be switched to the power battery for power supply after shutdown. The main state value HBS_state is assigned as the fifth value immediately, so as to trigger the fault shutdown processing program corresponding to the main state value HBS_state being the fifth value, and the fault shutdown can be executed, after shutdown the switching can be completed.
(3) When HBS_state is equal to the third value and HBS_Hstate is equal to the fourth value, updating the fault state of each fuel cell in the fuel cell system, turning off the branch in which the state target number FCs_Hstate_i at the current time is reduced compared with the state target number FCs_Hstate_i at the time when the main state value HBS_state is determined. If all branches are turned off, set the program jump symbol to one, otherwise, set the program jump symbol to zero. If the program jump symbol is set to one, the main state value HBS_state is assigned as the fifth value immediately, so as to trigger the corresponding fault shutdown processing program corresponding to the main state value HBS_state being the fifth value.
(4) When HBS_state is equal to the third value and HBS_Hstate is equal to the fifth value, the main state value HBS_state is immediately assigned as the fifth value, so as to trigger the corresponding fault shutdown processing program corresponding to the main state value HBS_state being the fifth value and execute the fault shutdown.

The seventh case: HBS_state = the fourth value, HBS_Hstate! = the fourth value
HBS_state = the fourth number, HBS_Hstate! = the fourth value, the case comprises the following sub-cases:
(1) When HBS_state is equal to the fourth value and HBS_Hstate is equal to the target value or the first value, the power battery returns to normal and can enter the hybrid power supply mode, but the recovery of the power battery can only be completed via shutdown switching. Therefore, a shutdown switching prompt is sent to the driver to prompt the driver that the power battery returns to normal and can enter the hybrid power supply state after shutdown switching. The driver chooses whether to shut down for switching according to self-demand and does not adopt program intervention. During shutdown switching, the hybrid power system loses power.
(2) When HBS_state is equal to the fourth value and HBS_Hstate is equal to the second value, the hybrid power system can be switched to the power battery for power supply after shutdown. The main state value HBS_state is assigned as the fifth value immediately to trigger the fault shutdown processing program corresponding to the main state value HBS_state being the fifth value, and the fault shutdown can be executed, after shutdown the switching can be completed.
(3) When HBS_state is equal to the fourth value and HBS_Hstate is equal to the third value, updating the fault state of each fuel cell in the fuel cell system, determining the power improvement symbol of each branch respectively, and whether the state target number FCs_Hstate_i of the branch is equal to the number of fuel cells connected in series in the branch at the determination time of the main state value HBS_state. For example, if four fuel cells are connected in series in each branch, determining whether the state target number FCs_Hstate_i of the branch is equal to 4 at the determination time of the previous main state value HBS_state.
   If the state target number FCs_Hstate_i of the branch is equal to the number of fuel cells connected in series in the branch, the switching process does not need to shut down, and only needs to restart the branch with the power improvement symbol set to one during the shutdown. So after waiting until the vehicle is in the parking state, restarting the branch with the power improvement symbol set to one. If the state target number FCs_Hstate_i of no branch is equal to the number of fuel cells connected in series in the branch, a health state improvement prompt of the hybrid power system is sent to the driver, prompting the driver to improve the power state of the hybrid power system by restarting, during which the vehicle is powered off.
(4) When HBS_state is equal to the fourth value and HBS_Hstate is equal to the fifth value, the main state value HBS_state is immediately assigned as the fifth value, to trigger the fault shutdown processing program corresponding to the main state value HBS_state being the fifth value.

The eighth case: HBS_state = the fifth value, HBS_Hstate = the fifth value
When the main state value HBS_state is determined to be the fifth value before starting the hybrid power system, in principle, the vehicle is stopped without startup. However, if the starting button of the vehicle is pressed, the fault management method provided by the embodiment is automatically entered, and the current health state value HBS_Hstate is automatically calculated. At this time, HBS_state=HBS_Hstate=the fifth value. In one embodiment, the main state value HBS_state can be assigned as the fifth value again to trigger the fault shutdown processing program to stop the vehicle.

The ninth case: HBS_state = HBS_Hstate! = the first value or the fourth value
When HBS_state = HBS_Hstate = target value or the second value or the third value, indicating that the power supply state of the hybrid power system has not changed, and no operation can be performed at this time, and the current power supply processing program can continue to operate.

During the above-mentioned fault processing program, the fuel cell is turned off by the bypass isolating switch or restarted by the bypass isolating switch.

The present disclosure can be applied to the dynamic operating process of rail vehicles comprising multiple fuel cells, to realize the power supply state conversion when the power system fails, and to realize the controlled switching between different main states of the system. The inventor applies the method to the new energy third-generation fuel cell system of CRRC Tangshan Company to realize fault management of 8 low-power fuel cells and the power battery for the hybrid power supply. Specifically, the 4 fuel cells are defined into upper and lower layers, and two fuel cells on each layer are connected in series as one branch. The vehicle has two branches for parallel power supply, and PLC is adopted to implement the fault management method provided by the embodiment. The actual test shows that the shutdown times of vehicles are reduced by 60% (the shutdown times of faults are reduced from 5 times to 2 times in the same test period) after adopting the method, and the power system can automatically restore power under some cases, which greatly improves the power supply reliability of the hybrid power system.

To sum up, the present disclosure provides the fault management method for the hybrid power system with multiple fuel cells, which has the following beneficial effects:
(1) realizing the real-time determination of the applicable main state of the system without directly interfering with the current operating state of the hybrid power system: the fuel cell hybrid power system with multiple fuel cells has completed the determination of the main state HBS_state when startup. Because the switching between the main states is not arbitrary, during the system operating and the applicable main state changes, if the system main state value HBS_state is directly modified, it will lead to the uncontrolled transformation of the main state of the system, resulting in system failure. Therefore, the present disclosure adopts a separate setting of the system health state value HBS_Hstate, and adopts the same determination method as the main state value HBS_Hstate to determine the health state value HBS_Hstate, so as to determine the current applicable main state of the system at the current time without directly interfering with the main state value.
(2) reducing the times of shutdown of the hybrid power system with multiple fuel cells, and improving the power supply reliability of the hybrid power system: when the hybrid power system with multiple fuel cells is started, the hybrid power system can enter different main states according to the fault conditions of each unit (power battery, fuel cell or DC/DC converter) in the system. When the system operating and the applicable main states change, the method provided by the present disclosure can realize controlled switching between different main states, effectively avoiding the dilemma that the system state switching can only be completed during shutdown, and improving the power supply reliability of the hybrid power system.
(3) restoring the power of the hybrid power system in time: when the hybrid power system with multiple fuel cells changes from one fault state to another light fault (normal) state (to regain part of power), the method provided by the present disclosure can automatically complete the switching of the power supply state of the hybrid power system while ensuring the safety of the system, so as to make the power self-restore, or prompt the driver to complete the manual switching at an appropriate time, effectively solving the problems that the improved power supply state of the hybrid power system can not be used or the power can only be restored by restarting, and improving the power supply quality of the hybrid power system with multiple fuel cells.

Based on the same inventive idea, the embodiment of the present disclosure provides the fault management device for the hybrid power system with multiple fuel cells, wherein the hybrid power system comprises a power battery and a fuel cell system, wherein the fuel cell system comprises at least two parallel branches, each branch is connected in series with at least two fuel cells, each branch is respectively connected to a DC bus via a DC/DC converter, and the power battery is connected to the DC bus. The bypass isolating switch is disposed at two ends of each fuel cell in parallel, and the bypass isolating switch is for connecting the fuel cell into the fuel cell system for power supply or disconnecting the fuel cell from the fuel cell system. The specific structure of the hybrid power system can be referred to Fig. 2 and the mentioned description. As shown in Fig. 6, the device comprises a state value acquisition module 310 and a fault management module 320.

The state value acquisition module 310 is configured to acquire the main state value of the hybrid power system and acquire the health state value of the hybrid power system at the current time. The main state value and the health state value represent the power supply state of the hybrid power system at different times, and the power supply state is determined by a power supply topology formed by the fuel cells capable of external power supply in the hybrid power system. The fault management module 320 executes a fault processing program corresponding to the two power supply states, according to the two power supply states corresponding to the main state value and the health state value, and controls the bypass isolating switch according to the fault processing program.

It can be understood that the fault management device for the hybrid power system with multiple fuel cells in the present embodiment, the realization principle and the technical effect thereof have been described in the above-mentioned method embodiments. For brief description, the fault management device of the hybrid power system with multiple fuel cells can refer to the corresponding description in the fault management method for the hybrid power system with multiple fuel cells, and will not be repeated here.

One skilled in the art will appreciate that embodiments of the present disclosure can be provided as methods, systems or computer program products. Accordingly, the present disclosure may take the form of an entirely hardware embodiment an entirely software embodiment or an embodiment combining software and hardware aspects. Further, the present disclosure may take the form of a computer program product implemented on one or more computer-usable storage media (including, but not limited to, disk storage, CD-ROM, optical memory, etc.) comprising the computer-usable program code therein.

The present disclosure is described with reference to flowcharts and/or block diagrams of methods, device (systems) and computer program products according to embodiments of the present disclosure. It should be understood that each flow and/or block in the flow chart and/or block diagram, as well as combinations of the flow and/or block in the flow chart and/or block diagram, can be implemented by computer program instructions. These computer program instructions can be provided to a processor of a general purpose computer, a special purpose computer, an embedded processor, or other programmable data processing device to generate a machine such that instructions executed by the processor of the computer or other programmable data processing device generate means for executing the functions specified in one or more flows of a flowchart and/or one or more blocks of a block diagram.

These computer program instructions may also be stored in a computer-readable memory capable of directing a computer or other programmable data processing device to operate in a specific manner such that the instructions stored in the computer-readable memory produce an article of manufacture comprising instruction means that perform the functions specified in one or more flows of the flow chart and/or one or more blocks of the block diagram.

These computer program instructions may also be loaded onto a computer or other programmable data processing device such that a series of operational steps are executed on the computer or other programmable device to produce computer-implemented processing, such that the instructions executed on the computer or other programmable device provide steps for implementing the functions specified in one or more flows of the flow chart and/or one or more blocks of the block diagram.

Although the preferred embodiments of the present disclosure have been described additional variations and modifications can be made to these embodiments once the basic inventive concepts are known to those skilled in the art. Therefore, the appended claims are intended to be interpreted to encompass preferred embodiments as well as all modifications and variations falling within the scope of the present disclosure.

Apparently, one skilled in the art may make various changes and modifications to the present disclosure without departing from the spirit and scope of the present disclosure. Thus, the present disclosure is intended to include such modifications and variations provided that they fall within the scope of the claims and their equivalents.

## Claims

1. A fault management method for a hybrid power system with multiple fuel cells, wherein the hybrid power system comprises a power battery and a fuel cell system, wherein the fuel cell system comprises at least two parallel branches, each branch is connected in series with at least two fuel cells, each branch is respectively connected to a DC bus via a DC/DC converter, and the power battery is connected to the DC bus, and a bypass isolating switch is disposed at two ends of each fuel cell in parallel for connecting the fuel cell into the fuel cell system for supplying power or disconnecting the fuel cell from the fuel cell system, wherein the method comprises:
acquiring a main state value of the hybrid power system;
acquiring a health state value of the hybrid power system in the current time, wherein the main state value and the health state value represent power supply states of the hybrid power system at different times, and the power supply states are determined by a power supply topology formed by the fuel cells capable of external power supply in the hybrid power system; and
according to two power supply states corresponding to the main state value and the health state value, executing a fault processing program corresponding to the two power supply states, and according to the fault processing program, controlling the bypass isolating switch.

2. The method according to claim 1, wherein the main state value and the health state value are determined by:
acquiring a fault state value Alarm_Bat of the power battery;
acquiring a state number FCs_Hstate of the fuel cell system, wherein FCs_Hstate represents the total number of the fuel cells capable of external power supply in the fuel cell system; and
according to Alarm_Bat and FCs_Hstate, determining the main state value HBS_state or the health state value HBS_Hstate of the hybrid power system.

3. The method according to claim 2, wherein acquiring the state number FCs_Hstate of the fuel cell system comprises:
identifying a fault state of each fuel cell, wherein the fault state comprises a normal state and a faulty state;
according to the fault state of each fuel cell, counting the state reference number FCs_Hstate_i_re of each branch respectively, wherein FCs_Hstate_i_re indicates the number of fuel cells having the fault state is the normal state in the i-th branch; and
according to the state reference number FCs_Hstate_i_re of each branch, determining the state number FCs_Hstate.

4. The method according to claim 3, wherein according to the state reference number FCs_Hstate_i_re of each branch, determining the state number FCs_Hstate, comprises:
determining whether the hydrogen storage system connected with the fuel cell system is faulty or not;
if the hydrogen storage system is not faulty, determining whether the DC/DC converter connected with each branch is faulty;
assigning the state reference number FCs_Hstate_i_re of the branch of the DC/DC converter without fault as the state target number FCs_Hstate_i of the branch, and setting the state target number FCs_Hstate_i of the branch of the DC/DC converter with fault to zero, FCs_Hstate_i indicating the number of fuel cells capable of external power supply; and
according to the sum of the state target number FCs_Hstate_i of each branch, acquiring the state number FCs_Hstate.

5. The method according to claim 4, wherein after determining whether the hydrogen storage system connected to the fuel cell system is faulty or not, the method further comprises:
if the hydrogen storage system is faulty, setting the state number FCs_Hstate of the fuel cell system directly to zero.

6. The method according to claim 4, wherein according to Alarm_Bat and FCs_Hstate, determining the main state value HBS_state or the health state value HBS_Hstate of the hybrid power system, comprises:
in case where Alarm_Bat indicates the power battery being normal and FCs_Hstate is equal to M, assigning the main state value HBS_state or the health state value HBS_Hstate as a target value, wherein M is the total number of fuel cells in the fuel cell system and the target value corresponds to the normal power supply state of the hybrid power system;
in case where Alarm_Bat indicates that the power battery is normal and FCs_Hstate∈ [1, M-1], assigning the main state value HBS_state or the health state value HBS_Hstate as a first value, wherein the first value corresponds to a hybrid power supply state of the hybrid power system;
in case where Alarm_Bat indicates that the power battery is normal and FCs_Hstate is equal to 0, assigning the main state value HBS_state or the health state value HBS_Hstate as a second value, wherein the second value corresponds to a pure power battery power supply state of the hybrid power system;
in case where Alarm_Bat indicates power battery failure and FCs_Hstate is equal to M, assigning the main state value HBS_state or the health state value HBS_Hstate as a third value, wherein the third value corresponds to a pure fuel cell power supply state of the hybrid power system;
in case where Alarm_Bat indicates power battery failure and FCs_Hstate∈[M ', M-1], assigning the main state value HBS_state or the health state value HBS_Hstate as a fourth value, wherein M' is the number of fuel cell for meeting the minimum power supply requirements of vehicles and the fourth value corresponds to a pure fuel cell failure power supply state of the hybrid power system; and
in case where Alarm_Bat indicates power battery failure and FCs_Hstatee[0, M '], assigning the main state value HBS_state or the health state value HBS_Hstate as a fifth value, wherein the fifth value corresponds to a fault state of the hybrid power system.

7. The method according to claim 6, wherein according to two power supply states corresponding to the main state value and the health state value, executing a fault processing program corresponding to the two power supply states, comprises:
in case where both HBS_state and HBS_Hstate are equal to the first value, updating the fault state of each fuel cell in the fuel cell system;
turning off the branch in which the state target number FCs_Hstate_i at the current time is reduced compared with the state target number FCs_Hstate_i at the time when the main state value HBS_state is determined;
if all branches are turned off, setting the program jump symbol to one, otherwise, setting the program jump symbol to zero; and
if the program jump symbol is set to one, assigning the main state value HBS_state immediately as the second value to trigger the pure power battery power supply processing program corresponding to the main state value HBS_state being the second value.

8. The method according to claim 7, wherein the fuel cell system comprises a first branch and a second branch in parallel, and after turning off the branch in which the state target number FCs_Hstate_i at the current time is reduced compared to the state target number FCs_Hstate_i at the time when the main state value HBS_state is determined, the method further comprises:
determining a power state symbol FCs1_rs and an operational state symbol FCs1_run of the first branch, and a power state symbol FCs2_rs and an operational state symbol FCs2_run of the second branch respectively, wherein the power state symbol indicates whether the power of the branch is improved or not, and the operational state symbol indicates whether the branch is in an operating state or not;
if the program jump symbol is set to zero, determining whether any one of following three situations occurs:
FCs1_rs is set to one and FCs2_rs is set to one; or
FCs1_rs is set to one and FCs2_run is set to zero; or
FCs2_rs is set to one and FCs1_run is set to zero; and
if any one of the three conditions occurs, after waiting until the vehicle is in a parking state, turning off the branch with the power improvement symbol set to one, and assigning the main state value HBS_state as the second value to trigger the pure power battery power supply processing program corresponding to the main state value HBS_state being the second value.

9. The method according to claim 6, wherein according to two power supply states corresponding to the main state value and the health state value, executing a fault processing program corresponding to the two power supply states, comprises:
in case where both HBS_state and HBS_Hstate are equal to the fourth value, updating the fault state of each fuel cell in the fuel cell system;
turning off the branch in which the state target number FCs_Hstate_i at the current time is reduced compared with the state target number FCs_Hstate_i at the time when the main state value HBS_state is determined;
if all branches are turned off, setting the program jump symbol to one, otherwise, set the program jump symbol to zero; and
if the program jump symbol is set to one, assigning the main state value HBS_ as the fifth value immediately to trigger the fault shutdown processing program corresponding to the main state value HBS_state being the fifth value.

10. The method according to claim 9, wherein the fuel cell system comprises a first branch and a second branch in parallel, and after turning off the branch in which the state target number FCs_Hstate_i at the current time is reduced compared to the state target number FCs_Hstate_i at the time when the main state value HBS_state is determined, the method further comprises:
determining a power state symbol FCs1_rs and an operational state symbol FCs1_run of the first branch, and a power state symbol FCs2_rs and an operational state symbol FCs2_run of the second branch respectively, wherein the power state symbol indicates whether the power of the branch is improved or not, and the operational state symbol indicates whether the branch is in the operating state or not; and
if the program jump symbol is set to zero, determining whether any one of the following three situations occurs:
FCs1_rs is set to one and FCs2_rs is set to one; or,
FCs1_rs is set to one and FCs2_run is set to zero; or
FCs2_rs is set to one and FCs1_run is set to zero; and
if any of the three conditions occurs, a health state improvement prompt of the hybrid power system is sent to a driver for prompting the driver that the power state of the hybrid power system can be improved by restarting.

11. The method according to claim 10, further comprising:
if any of the above three conditions does not occur and the power improvement symbols of the first branch and the second branch are not all set to zero, waiting until the vehicle is in a parking state, and restarting the branch with the power improvement symbol set to one.

12. The method according to claim 6, wherein according to two power supply states corresponding to the main state value and the health state value, executing a fault processing program corresponding to the two power supply states, comprises:
updating the fault state of each fuel cell in the fuel cell system when HBS_state is equal to a target value and HBS_Hstate is equal to a first value;
turning off the branch in which the state target number FCs_Hstate_i at the current time is reduced compared with the state target number FCs_Hstate_i at the time when the main state value HBS_state is determined;
if all branches are turned off, setting the program jump symbol to one, otherwise, setting the program jump symbol to zero; and
if the program jump symbol is set to one, assigning the main state value HBS_state immediately as the second value to trigger the pure power battery power supply processing program corresponding to the main state value HBS_state being the second value.

13. The method according to claim 6, wherein according to two power supply states corresponding to the main state value and the health state value, executing a fault processing program corresponding to the two power supply states, comprises:
updating the fault state of each fuel cell in the fuel cell system when HBS_state is equal to the target value and HBS_Hstate is equal to the second value;
turning off the branch in which the state target number FCs_Hstate_i at the current time is reduced compared with the state target number FCs_Hstate_i at the time when the main state value HBS_state is determined; and
assigning the main state value HBS_state immediately as a second value to trigger the pure power battery power processing program corresponding to the main state value HBS_state being the second value.

14. The method according to claim 6, wherein according to two power supply states corresponding to the main state value and the health state value, executing a fault processing program corresponding to the two power supply states, comprises:
in case where HBS_state is equal to the first value and HBS_Hstate is equal to the third value, the fourth value, or the fifth value, assigning the main state value HBS_state immediately as the fifth value to trigger the fault shutdown processing program corresponding to the main state value HBS_state being the fifth value.

15. The method according to claim 6, wherein the fuel cell system includes a first branch and a second branch in parallel, and the fault processing program corresponding to the two power supply states corresponding to the main state value and the health state value is executed according to the two power supply states, comprising:
updating the fault state of each fuel cell in the fuel cell system when HBS_state is equal to a first value and HBS_Hstate is equal to a target value;
determining the power improvement symbol FCs1_rs and the operational state symbol FCs1_run of the first branch and the power state symbol FCs2_rs and the operational state symbol FCs2_run of the second branch respectively, wherein the power state symbol indicates whether the power of the branch is improved or not, and the operational state symbol indicates whether the branch is in the operating state or not;
determining whether any of the following three situations occur:
FCs1_rs is set to one and FCs2_rs is set to one; or
FCs1_rs is set to one and FCs2_run is set to zero; or
FCs2_rs is set to one and FCs1_run is set to zero; and
if any one of the three conditions occurs, after waiting until the vehicle is in the parking state, turning off the branch with the power improvement symbol set to one, and assigning the main state value HBS_state as the second value to trigger the pure power battery power supply processing program corresponding to the main state value HBS_state being the second value.

16. The method according to claim 6, wherein according to two power supply states corresponding to the main state value and the health state value, executing a fault processing program corresponding to the two power supply states, comprises:
updating the fault state of each fuel cell in the fuel cell system when HBS_state is equal to the first value and HBS_Hstate is equal to the second value, wherein the fault state comprises a normal state and a faulty state;
turning off the branch in which the state target number FCs_Hstate_i at the current time is reduced compared with the state target number FCs_Hstate_i at the time when the main state value HBS_state is determined;
assigning the main state value HBS_state immediately as the second value to trigger the pure power battery power processing program corresponding to the main state value HBS_state being the second value.

17. The method according to claim 6, wherein according to two power supply states corresponding to the main state value and the health state value, executing a fault processing program corresponding to the two power supply states, comprises:
in case where HBS_state is equal to the first value and HBS_Hstate is equal to the third value, the fourth value, or the fifth value, assigning the main state value HBS_state immediately as the fifth value, to trigger the fault shutdown processing program corresponding to the main state value HBS_state being the fifth value.

18. The method according to claim 6, wherein according to two power supply states corresponding to the main state value and the health state value, executing a fault processing program corresponding to the two power supply states, comprises:
in case where HBS_state is equal to the second value and HBS_Hstate is equal to the target value or the first value, after waiting until the vehicle is in the parking state, assigning the current health state value HBS_Hstate as the main state value HBS_state to trigger the power supply processing program corresponding to the new main state value.

19. The method according to claim 6, wherein according to two power supply states corresponding to the main state value and the health state value, executing a fault processing program corresponding to the two power supply states, comprises:
in case where HBS_state is equal to the first value and HBS_Hstate is equal to the third value, the fourth value, or the fifth value, assigning the main state value HBS_state immediately as the fifth value to trigger the fault shutdown processing program corresponding to the main state value HBS_state being the fifth value.

20. The method according to claim 6, wherein according to two power supply states corresponding to the main state value and the health state value, executing a fault processing program corresponding to the two power supply states, comprises:
in case where HBS_state is equal to the third value and HBS_Hstate is equal to the target value or the first value, sending a shutdown switching prompt to a driver to prompt the driver that the power battery is returned to normal and the driver can enter the hybrid power supply state via shutdown.

21. The method according to claim 6, wherein according to two power supply states corresponding to the main state value and the health state value, executing a fault processing program corresponding to the two power supply states, comprises:
in case where HBS_state is equal to the fourth value and HBS_Hstate is equal to the fifth value, assigning the main state value HBS_state immediately as the fifth value to trigger the fault shutdown processing program corresponding to the main state value HBS_state being the fifth value.

22. The method according to claim 6, wherein according to two power supply states corresponding to the main state value and the health state value, executing a fault processing program corresponding to the two power supply states, comprises:
updating the fault state of each fuel cell in the fuel cell system when HBS_state is equal to the third value and HBS_Hstate is equal to the fourth value;
turning off the branch in which the state target number FCs_Hstate_i at the current time is reduced compared with the state target number FCs_Hstate_i at the time when the main state value HBS_state is determined;
if all branches are turned off, setting the program jump symbol to one, otherwise, set the program jump symbol to zero; and
if the program jump symbol is set to one, assigning the main state value HBS_state as the fifth value immediately to trigger the fault shutdown processing program corresponding to the main state value HBS_state being the fifth value.

23. The method according to claim 6, wherein according to two power supply states corresponding to the main state value and the health state value, executing a fault processing program corresponding to the two power supply states, comprises:
in case where HBS_state is equal to the fourth value and HBS_Hstate is equal to the target value or the first value, sending a shutdown switching prompt to a driver to prompt the driver that the power battery is restored to normal and the hybrid power supply state can be entered via shutdown switching.

24. The method according to claim 6, wherein according to two power supply states corresponding to the main state value and the health state value, executing a fault processing program corresponding to the two power supply states, comprises:
in case where HBS_state is equal to the fourth value and HBS_Hstate is equal to the fifth value, assigning the main state value HBS_state immediately as the fifth value to trigger the fault shutdown processing program corresponding to the main state value HBS_state being the fifth value.

25. The method according to claim 6, wherein according to two power supply states corresponding to the main state value and the health state value, executing a fault processing program corresponding to the two power supply states, comprises:
updating the fault state of each fuel cell in the fuel cell system when HBS_state is equal to the fourth value and HBS_Hstate is equal to the third value;
determining the power improvement symbol of each branch respectively, and determining whether the state target number FCs_Hstate_i of the branch is equal to the number of fuel cells connected in series in the branch at the determination time of the main state value HBS_state, wherein the power state symbol indicates whether the power of the branch is improved or not;
if the state target number FCs_Hstate_i of the branch is equal to the number of fuel cells connected in series in the branch, waiting until the vehicle is in the parking state, and restarting the branch with the power improvement symbol set to one;
otherwise, sending a health state improvement prompt of the hybrid system to the driver for indicating that the driver can improve the power state of the hybrid system by restarting.

26. A fault management device for a hybrid power system with multiple fuel cells, wherein the hybrid power system comprises a power battery and a fuel cell system, wherein the fuel cell system comprises at least two parallel branches, each branch is connected in series with at least two fuel cells, each branch is respectively connected to a DC bus via a DC/DC converter, and the power battery is connected to the DC bus, a bypass isolating switch is disposed at two ends of each fuel cell in parallel, and the bypass isolating switch is for connecting the fuel cell into the fuel cell system for supplying power or disconnecting the fuel cell from the fuel cell system; wherein the device comprises:
a state value acquisition module, configured to acquire a main state value of the hybrid power system and a health state value of the hybrid power system at the current time; wherein the main state value and the health state value represent the power supply state of the hybrid power system at different times, and the power supply state is determined by a power supply topology formed by the fuel cells capable of external power supply in the hybrid power system; and
a fault management module, configured to, according to two power supply states corresponding to the main state value and the health state value, execute a fault processing program corresponding to the two power supply states, and according to the fault processing program, control the bypass isolating switch.
